# EUROPEAN PATENT APPLICATION

(11) **EP 3 909 912 A1**
(43) Date of publication of application: **17.11.2021**
(21) Application number: 20834736.9
(22) Date of filing: 02.07.2020
(51) Int. Cl.: C01B 25/45, H01M 4/1397, H01M 4/139, H01M 4/58

(54) **METHOD FOR PREPARING MULTI-STAGE PORE-FORMING LITHIUM IRON PHOSPHATE**

(30) Priority: 03.07.2019 CN 201910595886
(71) Applicant: Chongqing Terui Battery Material Co., Ltd., Chongqing 400080 (CN)
(72) Inventor: SHI, Maohu, Chongqing 400080 (CN); LIU, Hong, Chongqing 400080 (CN); CHENG, Chong, Chongqing 400080 (CN); QIU, Xiaowei, Chongqing 400080 (CN)
(74) Representative: Ipside
(86) International application number: PCT/CN2020/099904
(87) International publication number: WO 2021/000911

(57) **Abstract**

In order to solve the technical problems of low capacity and poor cycle performance of existing multi-stage lithium iron phosphate batteries, a method for preparing multi-stage pore-forming lithium iron phosphate is provided, comprising the following steps: preparing primary porous ammonium ferrous phosphate, preparing secondary porous lithium iron phosphate and preparing tertiary porous lithium iron phosphate, and finally synthesizing multi-stage pore-forming lithium iron phosphate. The prepared multi-stage pore-forming lithium iron phosphate has the technical effects of high battery capacity and excellent cycle performance, and is superior to lithium iron phosphate prepared in the prior art.

## Description

### Technical Field

The prevent invention relates to the field of new energy materials, in particular to a method for preparing multi-stage pore-forming lithium iron phosphate.

### Background of the Invention

Positive electrode materials of lithium ion batteries used in new energy products in the current market are mainly lithium iron phosphate and a ternary material; and the lithium iron phosphate has high acceptance in power grid energy storage, low-speed vehicles and electric tools due to high safety performance and cost advantages.

Due to the single-channel lithium ion transmission structure and relatively unsatisfactory electron and ion conductivity of the lithium iron phosphate, the gram capacity of the lithium iron phosphate is inhibited, and long cycle cannot be well exerted. A conventional solution mainly includes carbon layer coating and metal ion doping, but the thickness and the coating property of the carbon layer and the metal ion effect are all inhibited and hindered in the production process, and one of the factors is that the particle surface is too compact, pore channels are insufficient, and mutual permeation of lithium ions and electrolytes is not smooth.

According to a method for preparing porous iron phosphate nano-powder in the patent CN108557794A, acetylene black coated iron phosphate is sintered in nitrogen at high temperature to remove acetylene black, but the acetylene black is low in density, easily floats on the liquid surface and cannot easily uniformly coat the surface of iron phosphate, carbon is left when the acetylene black is sintered in the nitrogen, and the final iron phosphate raw material may be polluted. According to a porous carbon in-situ composite lithium iron phosphate positive electrode material and a preparation method thereof in the patent CN102201576A, porous carbon, iron phosphate and a lithium source are sintered together to synthesize porous carbon in-situ composite lithium iron phosphate, at the moment, a large part of porous carbon participates in reduction of ferric iron, and a solid-phase reaction also has a great influence on the structure and coating effect of the porous carbon. According to olive-shaped porous lithium iron phosphate and a preparation method thereof in the patent CN107221672A, porous lithium iron phosphate is synthesized by adopting a hydrothermal-calcination method, but the carbon content in the hydrothermal method depends on the adsorption capacity and coating effect of an organic carbon source on a precursor, so that the carbon content cannot be accurately regulated and controlled.

In conclusion, development of the technology for improving the capacity and the cycle performance of lithium iron phosphate is an inevitable trend and is an urgent problem to be solved at present.

### Summary of the Invention

The present invention aims to provide a method for preparing multi-stage pore-forming lithium iron phosphate, and the obtained battery is high in capacity and excellent in cycle performance.

The object of the present invention is achieved by the technical solution as follows: the method for preparing multi-stage pore-forming lithium iron phosphate includes the following steps:
S1, preparing primary porous ammonium ferrous phosphate: adding phosphoric acid with the concentration of 85% into deionized water, carrying out stirring for 30-60 minutes, introducing inert gas by using an aeration disc or an aeration pipe for 10-60 minutes, and adding a ferrous salt, wherein the molar ratio of ferrous ions to phosphate ions is (0.97-1):1; continuing carrying out stirring for 30-60 minutes after the ferrous salt is completely dissolved, and then adding an additive A and an additive B, wherein the mole number of the additive A is 0.01-0.1 of that of the ferrous ions, and the mass of the additive B is 0.1-0.3 of that of the phosphoric acid; at the moment, heating the solution to 60-90°C, keeping the temperature constant, carrying out titration by using ammonia water so that a pH value of the solution is controlled to be 6-7, then carrying out a reaction for 30-90 minutes, carrying out filtering while the solution is hot, carrying out washing by using hot water, then carrying out washing by using an organic solvent, placing the obtained solid into a vacuum drying oven, and drying the solid for 12-24 hours at the temperature of 80-90°C to obtain a primary porous ammonium ferrous phosphate solid, wherein the additive A is an adsorption medium, and the additive B is a fat-soluble pigment or a lipid polymer;
S2, preparing secondary porous lithium iron phosphate: adding the primary porous ammonium ferrous phosphate solid obtained in the step S1 into deionized water, and adding an additive C, wherein the additive C is a coating which is easy to decompose and sublimate at low temperature, and the mole number of the additive C is 0.02-0.2 of that of ammonium ferrous phosphate; then adding a lithium source, so that the molar ratio of lithium ions to phosphate ions is (1-1.1):1, carrying out mixing for 4-8 hours, then transferring all slurry into a nano sand mill, grinding the slurry for 4-12 hours, and then carrying out granulating by using a centrifugal spray drying tower; carrying out sintering in a high-purity inert atmosphere, namely carrying out heating to 400-600°C at 2.5-5°C/min, and carrying out heat preservation for 6-12 hours, and then carrying out natural cooling to obtain a secondary porous lithium iron phosphate solid;
S3, preparing tertiary porous lithium iron phosphate: crushing the obtained secondary porous lithium iron phosphate solid in the step S2, adding the crushed secondary porous lithium iron phosphate solid into deionized water, and adding an additive D, wherein the additive D is a porous carbon material, and the mass of the additive D is 0.15-0.6 of that of the obtained lithium iron phosphate in the step S2; carrying out mixing for 4-8 hours, then transferring all slurry to a nano sand mill, grinding the slurry for 4-12 hours, and carrying out granulating by using a centrifugal spray drying tower; carrying out sintering in a high-purity inert atmosphere, namely carrying out heating to 600-800°C at 2.5-5°C/min, and carrying out heat preservation for 6-12 hours, and then carrying out natural cooling; and milling the product by using a jet mill to obtain lithium iron phosphate with a particle size D50 of 1-2 microns.

Further, in the step S1, the pressure of the inert gas introduced by using the aeration disc or the aeration pipe is 0.01-0.1 MPa; the inert gas is nitrogen, argon, helium and the like; a stirring rate is 100-300 revolutions per minute; the ferrous salt is one or more of ferrous nitrate, ferrous sulfate, ferrous oxalate, ferrous hydroxide, ferrous cyanide and ferrous lactate; the additive A is one or more of aluminum oxide, silicon carbide, titanium carbide and niobium carbide; the additive B is one or more of chlorophyll, xanthophyll, lycopene, capsanthin, polypropylene ester, phenolic resin and polyurethane; and the organic solvent is one or more of acetone, ethanol, normal hexane and chloroform.

Further, in the step S2, the additive C is one or more of ammonium chloride, ammonium carbonate, ammonium bicarbonate, urea, iodine and naphthalene; the lithium source is one or more of lithium carbonate, lithium oxalate and lithium hydroxide monohydrate; a grinding medium of the nano sand mill is zirconia balls with a diameter of 0.6-0.7 mm, and a rotating speed is 1500-3000 revolutions per minute; the temperature of a spray drying inlet and the temperature of a spray drying outlet are 160-250°C and 80-110°C, respectively, and a rotating speed of an atomizing disc is 16,000-24,000 revolutions per minute; and the high-purity inert atmosphere is nitrogen or argon.

Further, in the step S3, the additive D is one or more of porous graphene, activated carbon, activated carbon fiber, mesoporous carbon, carbon nanotubes and a carbon molecular sieve; a grinding medium of the nano sand mill is zirconia balls with a diameter of 0.3-0.4 mm, and a rotating speed is 1,500-3,000 revolutions per minute; the temperature of a spray drying inlet and the temperature of a spray drying outlet are 160-250°C and 80-110°C, respectively, and a rotating speed of an atomizing disc is 16,000-24,000 revolutions per minute; the high-purity inert atmosphere is nitrogen or argon; and an air pressure of 0.6-0.8 MPa is adopted for jet milling, and the particle size D50 is controlled to be 1-2 microns.

Further, in the step S1, the ferrous salt is ferrous nitrate, and the additive A is silicon carbide.

Further, in the step S2, the additive C is ammonium carbonate, and the lithium source is lithium carbonate.

Further, the additive D in the step S3 is porous graphene.

The present invention provides the method for preparing multi-stage pore-forming lithium iron phosphate, the primary porous ammonium ferrous phosphate is mainly formed by introducing an adsorption medium such as aluminum oxide in the crystal formation and growth process of ammonium ferrous phosphate to form flaky ammonium ferrous phosphate, coating the flaky ammonium ferrous phosphate with a fat-soluble substance, and carrying out washing with an organic solvent to remove the fat-soluble substance on a crystal; the secondary porous lithium iron phosphate is formed by coating a mixed material with a substance which is easy to decompose and sublimate at low temperature, forming holes after high-temperature sintering without introducing carbon in the process, and forming holes in an original lithium iron phosphate crystal; and the tertiary porous lithium iron phosphate is formed by synthesizing in-situ porous carbon-coated lithium iron phosphate by adopting a porous carbon material. Through the three-stage pore-forming, not only the original material ammonium ferrous phosphate crystal, but also the secondary carbon-free lithium iron phosphate crystal and the tertiary carbon-coated lithium iron phosphate, all adopt targeted pore-forming in different mechanisms, and finally the multi-stage pore-forming lithium iron phosphate is synthesized; by the flaky structure, the lithium ion transmission distance is shortened, aluminum oxide or silicon carbide and the like are interspersed among flakes, the overall conductivity is improved through porous carbon, and infiltration and conveying of electrolytes and lithium ions are optimized through the porous morphology.

The multi-stage pore-forming lithium iron phosphate prepared by the present invention has the technical effects of high battery capacity and excellent cycle performance, and is greatly superior to lithium iron phosphate prepared in the prior art.

### Brief description of the Drawings

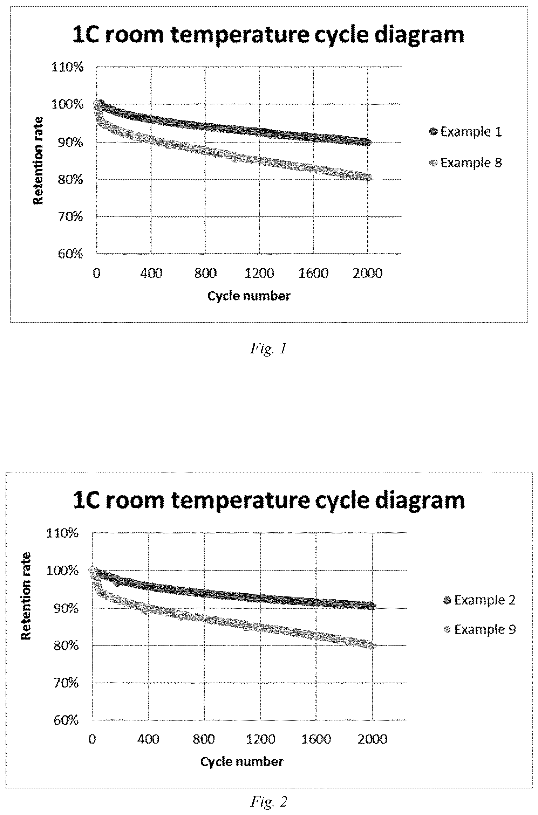

Fig. 1 is a 1C room temperature cycle comparison diagram of Example 1 and Example 8 of the present invention.
Fig. 2 is a 1C room temperature cycle comparison diagram of Example 2 and Example 9 of the present invention.

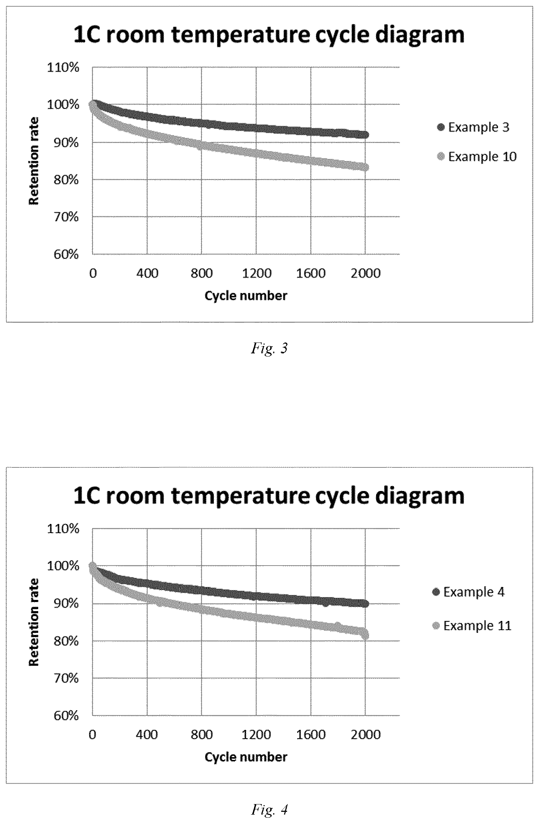

Fig. 3 is a 1C room temperature cycle comparison diagram of Example 3 and Example 10 of the present invention.
Fig. 4 is a 1C room temperature cycle comparison diagram of Example 4 and Example 11 of the present invention.

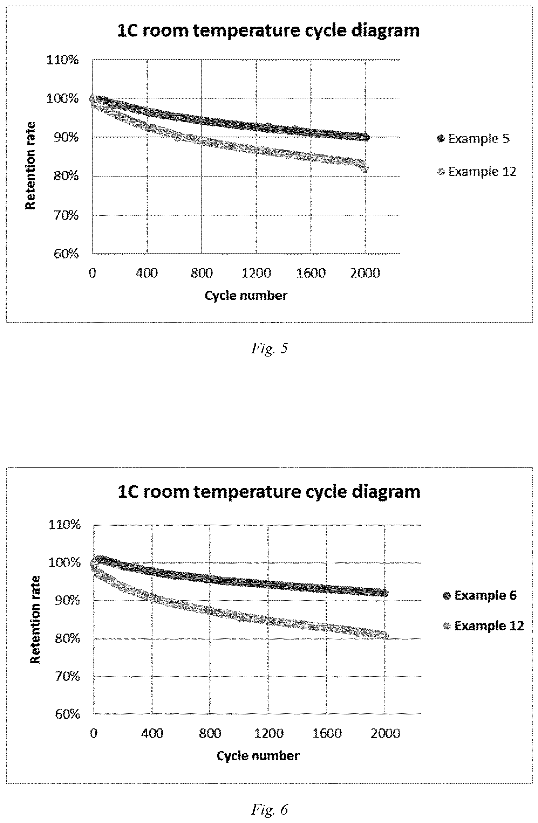

Fig. 5 is a 1C room temperature cycle comparison diagram of Example 5 and Example 12 of the present invention.
Fig. 6 is a 1C room temperature cycle comparison diagram of Example 6 and Example 13 of the present invention.

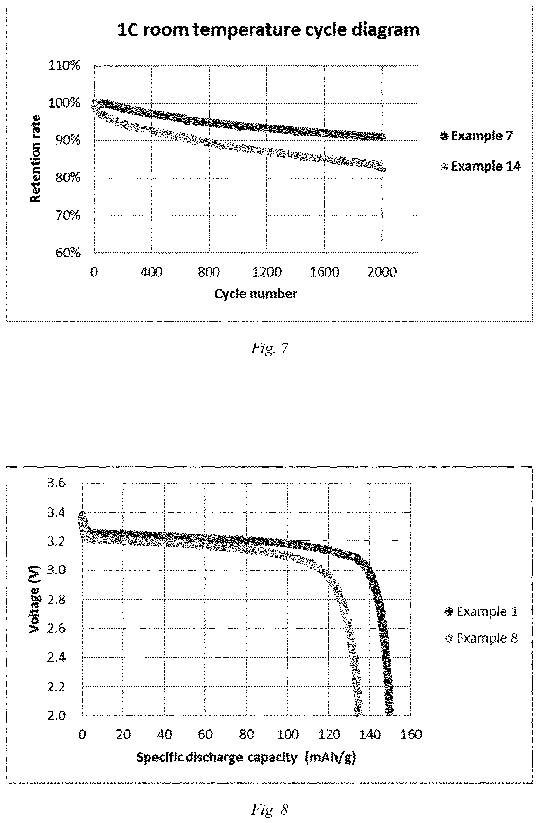

FIG. 7 is a 1C room temperature cycle comparison diagram of Example 7 and Example 14 of the present invention.
Fig. 8 is a specific discharge capacity comparison diagram of Example 1 and Example 8 of the present invention.

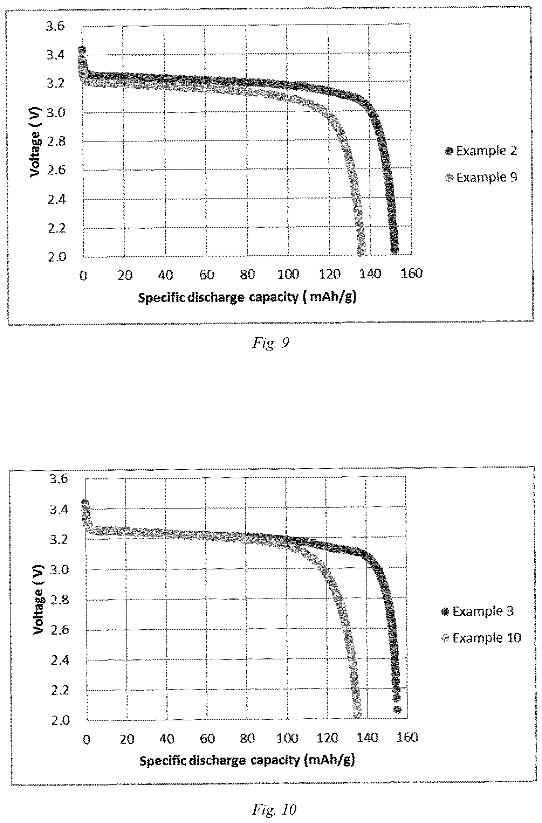

Fig. 9 is a specific discharge capacity comparison diagram of Example 2 and Example 9 of the present invention.
Fig. 10 is a specific discharge capacity comparison diagram of Example 3 and Example 10 of the present invention.

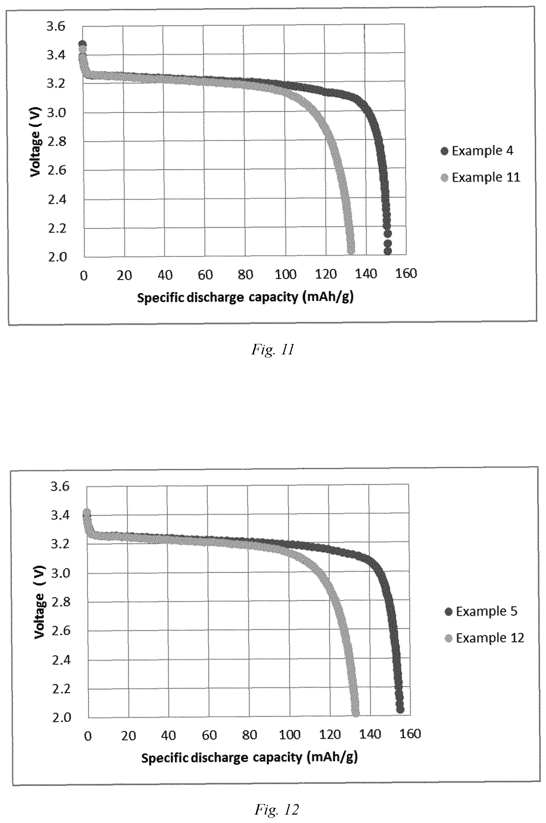

Fig. 11 is a specific discharge capacity comparison diagram of Example 4 and Example 11 of the present invention.
Fig. 12 is a specific discharge capacity comparison diagram of Example 5 and Example 12 of the present invention.

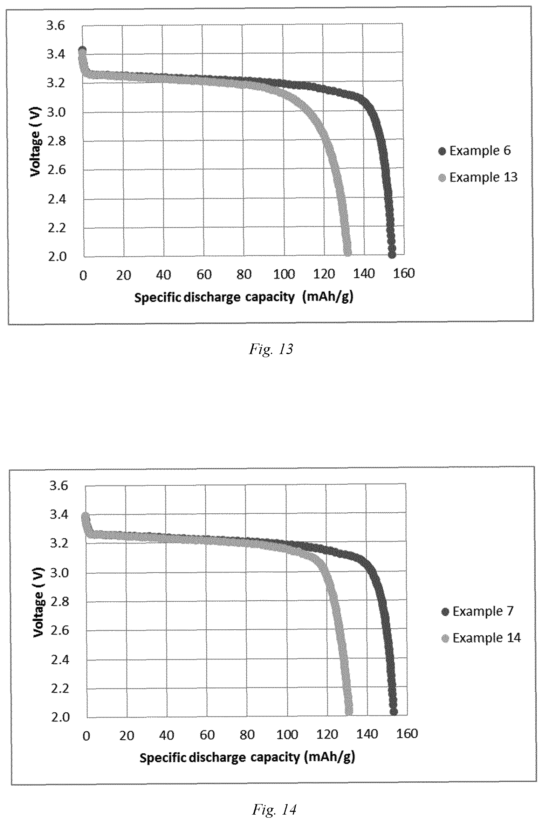

Fig. 13 is a specific discharge capacity comparison diagram of Example 6 and Example 13 of the present invention.
Fig. 14 is a specific discharge capacity comparison diagram of Example 7 and Example 14 of the present invention.

### Detailed Description of Embodiments

The present invention will be further described below with reference to examples.

### Example 1

300 g of phosphoric acid with the mass fraction of 85% is added into 3L of deionized water, the solution is stirred for 30 minutes, after nitrogen with the pressure of 0.01 MPa is introduced into the solution by using an aeration disc for 10 minutes, 720 g of ferrous sulfate heptahydrate is slowly added, stirring is continued to be performed for 30 minutes after the ferrous sulfate heptahydrate is completely dissolved, then 10 g of nano aluminum oxide and 60 g of phenolic resin are added, at the moment, the solution is heated to 60°C, kept at constant temperature, and titrated by using ammonia water, so that a pH value of the solution is controlled to be 6, then a reaction is carried out for 30 minutes, the reaction solution is filtered while the solution is hot, the filtered product is washed with hot water firstly, and then is washed with acetone, and the obtained solid is dried in a vacuum drying oven at the temperature of 80°C for 12 hours;

300 g of the dried solid is taken, and is added into 3L of deionized water, 10 g of ammonium chloride is added, then 65.8 g of lithium carbonate is added, then mixing is performed for 4 hours, and all slurry is transferred into a nano sand mill, and is ground for 4 hours, wherein a grinding medium of the sand mill is zirconia balls with a diameter of 0.6-0.7 mm, and a rotating speed is 1,500 revolutions per minute; granulating is performed by using a centrifugal spray drying tower, wherein the temperature of a spray drying inlet and the temperature of a spray drying outlet are 160°C and 80°C, respectively, and a rotating speed of an atomizing disc is 16,000 revolutions per minute; and a sample is sintered in high-purity nitrogen, namely the sample is heated to 450°C at 2.5°C/min, and subjected to heat preservation for 10 hours, and the sintered sample is naturally cooled;

300 g of the solid is taken, and is added into 3L of deionized water, 45 g of activated carbon fiber is added, and after mixing is performed for 8 hours, all slurry is transferred into a nano sand mill, and is ground for 4 hours, wherein a grinding medium of the sand mill is zirconia balls with a diameter of 0.3-0.4 mm, and a rotating speed is 1,500 revolutions per minute; granulating is performed by using a centrifugal spray drying tower, wherein the temperature of a spray drying inlet and the temperature of a spray drying outlet are 190°C and 85°C, respectively, and a rotating speed of an atomizing disc is 20,000 revolutions per minute; and a sample is sintered in high-purity argon, namely the sample is heated to 600°C at 2.5°C/min, and subjected to heat preservation for 12 hours, the sintered sample is naturally cooled, and then the cooled product is milled by using a jet mill to obtain uniform lithium iron phosphate with a particle size D50 of 1-2 microns, wherein an air pressure of 0.6 MPa is adopted for jet milling.

### Example 2

300 g of phosphoric acid with the mass fraction of 85% is added into 3L of deionized water, the solution is stirred for 40 minutes, after nitrogen with the pressure of 0.02 MPa is introduced into the solution for 10 minutes by using an aeration disc, 740 g of ferrous nitrate hexahydrate is slowly added, stirring is continued to be performed for 40 minutes after the ferrous salt is completely dissolved, 2.6 g of aluminum oxide and 26 g of xanthophyll are added, at the moment, the solution is heated to 70°C, kept at constant temperature and titrated by using ammonia water, so that a pH value of the solution is controlled to be 6.5, then a reaction is carried out for 40 minutes, the reaction solution is filtered while the solution is hot, the filtered product is washed with hot water firstly, and then is washed with ethanol, and the obtained solid is dried in a vacuum drying oven at the temperature of 85°C for 18 hours;

300 g of the dried solid is taken, and is added into 3L of deionized water, 25 g of ammonium carbonate is added, after 100 g of lithium oxalate is added, mixing is performed for 6 hours, and all slurry is transferred into a nano sand mill, and is ground for 7 hours, wherein a grinding medium of the sand mill is zirconia balls with a diameter of 0.6-0.7 mm, and a rotating speed is 1,500 revolutions per minute; granulating is performed by using a centrifugal spray drying tower, wherein the temperature of a spray drying inlet and the temperature of a spray drying outlet are 210°C and 102°C, respectively, and a rotating speed of an atomizing disc is 17,000 revolutions per minute; and a sample is sintered in a high-purity inert atmosphere, namely the sample is heated to 550°C at 3.5°C/min, and subjected to heat preservation for 12 hours, and the sintered sample is naturally cooled;

300 g of the solid is taken, and is added into 3L of deionized water, 50 g of carbon nanotubes are added, and after mixing is performed for 7 hours, all slurry is transferred into a nano sand mill, and is ground for 12 hours, a grinding medium of the sand mill is zirconia balls with a diameter of 0.3-0.4 mm, and a rotating speed is 3,000 revolutions per minute; granulating is performed by using a centrifugal spray drying tower, wherein the temperature of a spray drying inlet and the temperature of a spray drying outlet are 175°C and 90°C, respectively, and a rotating speed of an atomizing disc is 22,000 revolutions per minute; and a sample is sintered in high-purity argon, namely the sample is heated to 800°C at 5°C/min, and subjected to heat preservation for 6 hours, then the sintered sample is naturally cooled, and the cooled product is milled by using a jet mill to obtain uniform lithium iron phosphate with a particle size D50 of 1-2 microns, wherein an air pressure of 0.8 MPa is adopted for jet milling.

### Example 3

300 g of phosphoric acid with the mass fraction of 85% is added into 3L of deionized water, the solution is stirred for 50 minutes, after nitrogen with the pressure of 0.03 MPa is introduced into the solution for 20 minutes by using an aeration disc, 749 g of ferrous nitrate hexahydrate is slowly added, stirring is continued to be performed for 50 minutes after ferrous phosphate is completely dissolved, then 5 g of nano titanium carbide and 76.5 g of lycopene are added, at the moment, the solution is heated to 90°C, kept at constant temperature and titrated by using ammonia water, so that a pH value of the solution is controlled to be 7, then a reaction is carried out for 90 minutes, the reaction solution is filtered while the solution is hot, the filtered product is washed with hot water firstly, and then washed with n-hexane, and the obtained solid is dried in a vacuum drying oven at the temperature of 90°C for 24 hours;

300 g of the dried solid is taken, and is added into 3L of deionized water, 2.8 g of ammonium bicarbonate is added, after 66 g of lithium carbonate is added, mixing is performed for 8 hours, and all slurry is transferred into a nano sand mill, and is ground for 4 hours, wherein a grinding medium of the sand mill is zirconia balls with a diameter of 0.6-0.7 mm, and a rotating speed is 1800 revolutions per minute; granulating is performed by using a centrifugal spray drying tower, wherein the temperature of a spray drying inlet and the temperature of a spray drying outlet are 180°C and 88°C, respectively, and a rotating speed of an atomizing disc is 18,000 revolutions per minute; and a sample is sintered in a high-purity inert atmosphere, namely the sample is heated to 550°C at 2.5°C/min, and subjected to heat preservation for 8 hours, and then the sintered sample is naturally cooled;

300 g of the solid is taken, and is added into 3L of deionized water, 50 g of porous graphene is added, and after mixing is performed for 6 hours, all slurry is transferred into a nano sand mill, and is ground for 6 hours, wherein a grinding medium of the sand mill is zirconia balls with a diameter of 0.3-0.4 mm, and a rotating speed is 1,800 revolutions per minute; granulating is performed by using a centrifugal spray drying tower, wherein the temperature of a spray drying inlet and the temperature of a spray drying outlet are 250°C and 110°C, respectively, and a rotating speed of an atomizing disc is 24,000 revolutions per minute; and a sample is sintered in high-purity argon, namely the sample is heated to 680°C at 3.5°C/min, and subjected to heat preservation for 10 hours, then the sintered sample is naturally cooled, and the cooled product is milled by using a jet mill to obtain uniform lithium iron phosphate with a particle size D50 of 1-2 microns, wherein an air pressure of 0.65 MPa is adopted for jet milling.

### Example 4

300 g of phosphoric acid with the mass fraction of 85% is added into 3L of deionized water, the solution is stirred for 60 minutes, after helium with the pressure of 0.04 MPa is introduced into the solution by using an aeration disc for 30 minutes, 454 g of ferrous oxalate dihydrate is slowly added, stirring is continued to be performed for 60 minutes after ferrous oxalate is completely dissolved, then 26.7 g of niobium carbide and 51 g of capsanthin are added, at the moment, the solution is heated to 80°C, kept at constant temperature, and titrated by using ammonia water, so that a pH value of the solution is controlled to be 6.5, then a reaction is carried out for 80 minutes, the reaction solution is filtered while the solution is hot, the filtered product is washed with hot water firstly, and then washed with chloroform, and the obtained solid is dried in a vacuum drying oven at the temperature of 90°C C for 20 hours;

300 g of the dried solid is taken, and is added into 3L of deionized water, 21.4 g of urea is added, after 75 g of lithium hydroxide monohydrate is added, mixing is performed for 7 hours, and all slurry is transferred into a nano sand mill, and is ground for 5 hours, wherein a grinding medium of the sand mill is zirconia balls with a diameter of 0.6-0.7 mm, and a rotating speed is 1,500 revolutions per minute; granulating is performed by using a centrifugal spray drying tower, wherein the temperature of a spray drying inlet and the temperature of a spray drying outlet are 170°C and 90°C respectively, and a rotating speed of an atomizing disc is 20,000 revolutions per minute; and a sample is sintered in high-purity argon, namely the sample is heated to 400°C at 3°C/min, and subjected to heat preservation for 12 hours, and then the sintered sample is naturally cooled;

300 g of the solid is taken, and is added into 3L of deionized water, 50 g of activated carbon is added, and after mixing is performed for 5 hours, all slurry is transferred into a nano sand mill, and is ground for 10 hours, wherein a grinding medium of the sand mill is zirconia balls with a diameter of 0.3-0.4 mm, and a rotating speed is 2,800 revolutions per minute; granulating is performed by using a centrifugal spray drying tower, wherein the temperature of a spray drying inlet and the temperature of a spray drying outlet are 240°C and 108°C, respectively, and a rotating speed of an atomizing disc is 18,000 revolutions per minute; and a sample is sintered in high-purity nitrogen, namely the sample is heated to 750°C at 4.5°C/min, and subjected to heat preservation for 8 hours, the sintered sample is naturally cooled, and the cooled product is milled by using a jet mill to obtain uniform lithium iron phosphate with a particle size D50 of 1-2 microns, wherein an air pressure of 0.7 MPa is adopted for jet milling.

### Example 5

300 g of phosphoric acid with the mass fraction of 85% is added into 3L of deionized water, the solution is stirred for 35 minutes, after helium with the pressure of 0.06 MPa is introduced into the solution by using an aeration disc for 40 minutes, 230 g of ferrous hydroxide is slowly added, stirring is continued to be performed for 50 minutes after the ferrous hydroxide is completely dissolved, then 2.5 g of nano silicon carbide and 70 g of chlorophyll are added, at the moment, the solution is heated to 70°C, kept at constant temperature, and titrated by using ammonia water, so that a pH value of the solution is controlled to be 6.5, then a reaction is carried out for 40 minutes, the reaction solution is filtered while the solution is hot, the filtered product is washed with hot water firstly, and then washed with ethanol, and the obtained solid is dried in a vacuum drying oven at the temperature of 85°C for 18 hours;

300 g of the dried solid is taken, and is added into 3L of deionized water, 22.6 g of iodine is added, after 132 g of lithium oxalate is added, mixing is performed for 4 hours, and all slurry is transferred into a nano sand mill, and is ground for 8 hours, wherein a grinding medium of the sand mill is zirconia balls with a diameter of 0.6-0.7 mm, and a rotating speed is 3,000 revolutions per minute; granulating is performed by using a centrifugal spray drying tower, wherein the temperature of a spray drying inlet and the temperature of a spray drying outlet are 160°C and 80°C, respectively, and a rotating speed of an atomizing disc is 22,000 revolutions per minute; and a sample is sintered in high-purity nitrogen, namely the sample is heated to 500°C at 4°C/min, and subjected to heat preservation for 8 hours, and then the sintered sample is naturally cooled;

300 g of the solid is taken, and is added into 3L of deionized water, 50 g of mesoporous carbon is added, and after mixing is performed for 4 hours, all slurry is transferred into a nano sand mill, and is ground for 6 hours, wherein a grinding medium of the sand mill is zirconia balls with a diameter of 0.3-0.4 mm, and a rotating speed is 2,000 revolutions per minute; granulating is performed by using a centrifugal spray drying tower, wherein the temperature of a spray drying inlet and the temperature of a spray drying outlet are 220°C and 105°C, respectively, and a rotating speed of an atomizing disc is 16,000 revolutions per minute; and a sample is sintered in high-purity nitrogen, namely the sample is heated to 650°C at 4°C/min, and subjected to heat preservation for 11 hours, then the sintered sample is naturally cooled, and the cooled product is milled by using jet mill to obtain uniform lithium iron phosphate with a particle size D50 of 1-2 microns, wherein an air pressure of 0.75 MPa is adopted for jet milling.

### Example 6

300 g of phosphoric acid with the mass fraction of 85% is added into 3L of deionized water, the solution is stirred for 45 minutes, after argon with the pressure of 0.8 MPa is introduced into the solution for 50 minutes by using an aeration disc, 602 g of ferrous lactate is slowly added, stirring is continued to be performed for 50 minutes after the ferrous lactate is completely dissolved, then 7.7 g of titanium carbide and 60 g of lycopene are added, at the moment, the solution is heated to 70°C, kept at constant temperature and titrated by using ammonia water, so that a pH value of the solution is controlled to be 6.5, then a reaction is carried out for 40 minutes, the reaction solution is filtered while the solution is hot, the filtered product is washed with hot water firstly, and then washed with acetone, and the obtained solid in a vacuum drying oven is dried at the temperature of 85°C for 15 hours;

300 g of the dried solid is taken, and is added into 3L of deionized water, 34.2 g of naphthalene is added, after 82 g of lithium hydroxide monohydrate is added, mixing is performed for 4 hours, and all slurry is transferred into a nano sand mill, and is ground for 8 hours, wherein a grinding medium of the sand mill is zirconia balls with a diameter of 0.6-0.7 mm, and a rotating speed is 3,000 revolutions per minute; granulating is performed by using a centrifugal spray drying tower, wherein the temperature of a spray drying inlet and the temperature of a spray drying outlet are 250°C and 110°C, respectively, and a rotating speed of an atomizing disc is 24,000 revolutions per minute; and a sample is sintered in high-purity argon, namely the sample is heated to 6,000°C at 5°C/min, and subjected to heat preservation for 10 hours, and then the sintered sample is naturally cooled;

300 g of the solid is taken, and is added into 3L of deionized water, 50 g of a carbon molecular sieve is added, and after mixing is performed for 6 hours, all slurry is transferred into a nano sand mill, and is ground for 5 hours, wherein a grinding medium of the sand mill is zirconia balls with a diameter of 0.3-0.4 mm, and a rotating speed is 2,500 revolutions per minute; granulating is performed by using a centrifugal spray drying tower, wherein the temperature of a spray drying inlet and the temperature of a spray drying outlet are 200°C and 100°C respectively, and a rotating speed of an atomizing disc is 21,000 revolutions per minute; and a sample is sintered in high-purity nitrogen, namely the sample is heated to 700°C at 4°C/min, subjected to heat preservation for 9 hours, then the sintered sample is naturally cooled, and the cooled product is milled by using a jet mill to obtain uniform lithium iron phosphate with a particle size D50 of 1-2 microns, wherein an air pressure of 0.7 MPa is adopted for jet milling.

### Example 7

300 g of phosphoric acid with the mass fraction of 85% is added into 3 L of deionized water, the solution is stirred for 55 minutes, after argon with the pressure of 0.1 MPa is introduced into the solution for 60 minutes by using an aeration disc, 726 g of ferrous nitrate hexahydrate is slowly added, stirring is continued to be performed for 40 minutes after the ferrous salt is completely dissolved, then 16 g of niobium carbide and 50 g of chlorophyll are added, at the moment, the solution is heated to 70°C, kept at the constant temperature, and titrated by using ammonia water, so that a pH value of the solution is controlled to be 6.5, then a reaction is carried out for 40 minutes, the reaction solution is filtered while the solution is hot, the filtered product is washed with hot water firstly, and then washed with ethanol, and the obtained solid is dried in a vacuum drying oven at the temperature of 85°C for 20 hours;

300 g of the dried solid is taken, and is added into 3L of deionized water, 28 g of ammonium carbonate is added, after 91 g of lithium oxalate is added, mixing is performed for 6 hours, and all slurry is transferred into a nano sand mill, and is ground for 12 hours, wherein a grinding medium of the sand mill is zirconia balls with a diameter of 0.6-0.7 mm, and a rotating speed is 2,000 revolutions per minute; granulating is performed by using a centrifugal spray drying tower, wherein the temperature of a spray drying inlet and the temperature of a spray drying outlet are 180°C and 88°C, respectively, and a rotating speed of an atomizing disc is 19,000 revolutions per minute; and a sample is sintered in high-purity nitrogen, namely the sample is heated to 550°C at 3.5°C/min, and subjected to heat preservation for 12 hours, and then the sintered sample is naturally cooled;

300 g of the solid is taken, and is added into 3L of deionized water, 50 g of porous graphene is added, and after mixing is performed for 7 hours, all slurry is transferred into a nano sand mill, and is ground for 8 hours, wherein a grinding medium of the sand mill is zirconia balls with a diameter of 0.3-0.4 mm, and a rotating speed is 2,200 revolutions per minute; granulating is performed by using a centrifugal spray drying tower, wherein the temperature of a spray drying inlet and the temperature of a spray drying outlet are 180°C and 80°C, respectively, and a rotating speed of the atomizing disc is 20,000 revolutions per minute; and a sample is sintered in high-purity nitrogen, namely the sample is heated to 680°C at 3.5°C/min, and subjected to heat preservation for 10 hours, the sintered sample is naturally cooled, and the cooled product is milled by using a jet mill to obtain uniform lithium iron phosphate with a particle size D50 of 1-2 microns, wherein an air pressure of 0.65 MPa is adopted for jet milling.

### Example 8

Example 8 is a comparative example to Example 1, and lithium iron phosphate is prepared under the same conditions of Example 1 without addition of an additive A, an additive B and an additive C, wherein an additive D is replaced with glucose.

### Example 9

Example 9 is a comparative example to Example 2, and lithium iron phosphate is prepared under the same conditions of Example 2 without addition of an additive A, an additive B and an additive C, wherein an additive D is replaced with glucose.

### Example 10

Example 10 is a comparative example to Example 3, and lithium iron phosphate is prepared under the same conditions of Example 3 without addition of an additive A, an additive B and an additive C, wherein an additive D is replaced with glucose.

### Example 11

Example 11 is a comparative example to Example 4, and lithium iron phosphate is prepared under the same conditions of Example 4 without addition of an additive A, an additive B and an additive C, wherein an additive D is replaced with glucose.

### Example 12

Example 12 is a comparative example to Example 5, and lithium iron phosphate is prepared under the same conditions of Example 5 without addition of an additive A, an additive B and an additive C, wherein an additive D is replaced with glucose.

### Example 13

Example 13 is a comparative example to Example 6, and lithium iron phosphate is prepared under the same conditions of Example 6 without addition of an additive A, an additive B and an additive C, wherein an additive D is replaced with glucose.

### Example 14

Example 14 is a comparative example to Example 7, and lithium iron phosphate is prepared under the same conditions of Example 7 without addition of an additive A, an additive B and an additive C, wherein an additive D is replaced with glucose.

Lithium iron phosphate prepared in Examples 1 to 14, SP and PVDF are uniformly mixed according to the mass ratio of 93: 4: 3, and then the mixture coats an aluminum foil with the size of 0.018 mm, wherein the coating thickness is 100-120 microns; the aluminum foil coated with the mixture is fully dried to obtain a positive electrode piece, the positive electrode piece is subjected to rolling, winding and shell mounting, and is sealed by laser welding, liquid injection is performed in a glove box filled with argon, and finally, charge and discharge performance test is carried out on an LAND battery tester with charge and discharge voltage of 3.65-2.0 V.

The following table shows the detection results of the positive electrode pieces prepared in Examples 1 to 14:

| Positive electrode piece | Specific discharge capacity (mAh/g) | Retention rate (%) after 2000 cycles |
|---|---|---|
| Example 1 | 150 | 89.95 |
| Example 2 | 152 | 90.5 |
| Example 3 | 155 | 92 |
| Example 4 | 151 | 90 |
| Example 5 | 155 | 90 |
| Example 6 | 154 | 92 |
| Example 7 | 153 | 91 |
| Example 8 | 135 | 80 |
| Example 9 | 136 | 80 |
| Example 10 | 135 | 83.2 |
| Example 11 | 133 | 81.3 |
| Example 12 | 133 | 81.94 |
| Example 13 | 132 | 80.65 |
| Example 14 | 131 | 82.65 |

It can be known from the detection results that the lithium iron phosphate synthesized by the method for preparing the multi-stage pore-forming lithium iron phosphate not only has high gram capacity, but also has good cycle performance.

It should be understood that the examples are for illustrative purposes only and are not intended to limit the scope of the present invention. Further, it should be understood that various changes and modifications of the present invention can be made by those skilled in the art after reading the teachings of the present invention, and these equivalents are also limited by the claims appended hereto.

## Claims

1. A method for preparing multi-stage pore-forming lithium iron phosphate, comprising the following steps:
S1, preparing primary porous ammonium ferrous phosphate: adding phosphoric acid with the concentration of 85% into deionized water, carrying out stirring for 30-60 minutes, introducing inert gas by using an aeration disc or an aeration pipe for 10-60 minutes, and adding a ferrous salt, wherein the molar ratio of ferrous ions to phosphate ions is (0.97-1):1; continuing carrying out stirring for 30-60 minutes after the ferrous salt is completely dissolved, and then adding an additive A and an additive B, wherein the mole number of the additive A is 0.01-0.1 of that of the ferrous ions, and the mass of the additive B is 0.1-0.3 of that of the phosphoric acid; at the moment, heating the solution to 60-90°C, keeping the temperature constant, carrying out titration by using ammonia water so that a pH value of the solution is controlled to be 6-7, then carrying out a reaction for 30-90 minutes, carrying out filtering while the solution is hot, carrying out washing by using hot water, then carrying out washing by using an organic solvent, placing the obtained solid into a vacuum drying oven, and drying the solid for 12-24 hours at the temperature of 80-90°C to obtain a primary porous ammonium ferrous phosphate solid, wherein the additive A is an adsorption medium, and the additive B is a fat-soluble pigment or a lipid polymer;
S2, preparing secondary porous lithium iron phosphate: adding the primary porous ammonium ferrous phosphate solid obtained in the step S1 into deionized water, and adding an additive C, wherein the additive C is a coating which is easy to decompose and sublimate at low temperature, and the mole number of the additive C is 0.02-0.2 of that of ammonium ferrous phosphate; then adding a lithium source, so that the molar ratio of lithium ions to phosphate ions is (1-1.1):1, carrying out mixing for 4-8 hours, then transferring all slurry into a nano sand mill, grinding the slurry for 4-12 hours, and then carrying out granulating by using a centrifugal spray drying tower; and carrying out sintering in a high-purity inert atmosphere, namely carrying out heating to 400-600°C at 2.5-5°C/min, and carrying out heat preservation for 6-12 hours, and then carrying out natural cooling to obtain a secondary porous lithium iron phosphate solid;
S3, preparing tertiary porous lithium iron phosphate: crushing the obtained secondary porous lithium iron phosphate solid in the step S2, adding the crushed secondary porous lithium iron phosphate solid into deionized water, and adding an additive D, wherein the additive D is a porous carbon material, and the mass of the additive D is 0.15-0.6 of that of the obtained lithium iron phosphate in the step S2; carrying out mixing for 4-8 hours, then transferring all slurry to a nano sand mill, grinding the slurry for 4-12 hours, and carrying out granulating by using a centrifugal spray drying tower; carrying out sintering in a high-purity inert atmosphere, namely carrying out heating to 600-800°C at 2.5-5°C/min, and carrying out heat preservation for 6-12 hours, and then carrying out natural cooling; and milling the product by using a jet mill to obtain lithium iron phosphate with a particle size D50 of 1-2 microns.

2. The method for preparing multi-stage pore-forming lithium iron phosphate according to claim 1, wherein in the step S1, the pressure of the inert gas introduced by using the aeration disc or the aeration pipe is 0.01-0.1 MPa; the inert gas is nitrogen, argon, helium and the like; a stirring rate is 100-300 revolutions per minute; the ferrous salt is one or more of ferrous nitrate, ferrous sulfate, ferrous oxalate, ferrous hydroxide, ferrous cyanide and ferrous lactate; the additive A is one or more of aluminum oxide, silicon carbide, titanium carbide and niobium carbide; the additive B is one or more of chlorophyll, xanthophyll, lycopene, capsanthin, polypropylene ester, phenolic resin and polyurethane; and the organic solvent is one or more of acetone, ethanol, normal hexane and chloroform.

3. The method for preparing multi-stage pore-forming lithium iron phosphate according to claim 1, wherein in the step S2, the additive C is one or more of ammonium chloride, ammonium carbonate, ammonium bicarbonate, urea, iodine and naphthalene; the lithium source is one or more of lithium carbonate, lithium oxalate and lithium hydroxide monohydrate; a grinding medium of the nano sand mill is zirconia balls with a diameter of 0.6-0.7 mm, and a rotating speed is 1,500-3,000 revolutions per minute; the temperature of a spray drying inlet and the temperature of a spray drying outlet are 160-250°C and 80-110°C, respectively, and a rotating speed of an atomizing disc is 16,000-24,000 revolutions per minute; and the high-purity inert atmosphere is nitrogen or argon.

4. The method for preparing multi-stage pore-forming lithium iron phosphate according to claim 1, wherein in the step S3, the additive D is one or more of porous graphene, activated carbon, activated carbon fiber, mesoporous carbon, carbon nanotubes and a carbon molecular sieve; a grinding medium of the nano sand mill is zirconia balls with a diameter of 0.3-0.4 mm, and a rotating speed is 1,500-3,000 revolutions per minute; the temperature of a spray drying inlet and the temperature of a spray drying outlet are 160-250°C and 80-110°C, respectively, and a rotating speed of an atomizing disc is 16,000-24,000 revolutions per minute; the high-purity inert atmosphere is nitrogen or argon; and an air pressure of 0.6-0.8 MPa is adopted for jet milling, and the particle size D50 is controlled to be 1-2 microns.

5. The method for preparing multi-stage pore-forming lithium iron phosphate according to any one of claims 1-4, wherein in the step S1, the ferrous salt is ferrous nitrate, and the additive A is silicon carbide.

6. The method for preparing multi-stage pore-forming lithium iron phosphate according to any one of claims 1-4, wherein in the step S2, the additive C is ammonium carbonate, and the lithium source is lithium carbonate.

7. The method for preparing multi-stage pore-forming lithium iron phosphate according to any one of claims 1-4, wherein the additive D in the step S3 is porous graphene.
